# EUROPEAN PATENT SPECIFICATION

(11) **EP 2 194 426 B1**
(45) Date of publication and mention of the grant of the patent: **23.03.2016**
(21) Application number: 09175373.1
(22) Date of filing: 09.11.2009
(51) Int. Cl.: G02F 1/35, G02B 27/09

(54) **Method and device for combining laser beams**
Verfahren und Vorrichtung zur Bündelung von Laserstrahlen
Procédé et dispositif pour combiner des faisceaux laser

(30) Priority: 13.11.2008 LT 2008089
(43) Date of publication of application: 09.06.2010
(73) Proprietor: UAB "Ekspla", 02300 Vilnius (LT)
(72) Inventor: Michailovas, Andrejus, 06325, Vilnius (LT); Mikalauskas, Saulius, 06202, Vilnius (LT); Regelskis, Kestutis, 06321, Vilnius (LT); Smilgevicius, Valerijus, 10219, Vilnius (LT)
(74) Representative: Draugeliene, Virgina Adolfina

(56) References cited:
- EP-A1- 1 772 771
- WO-A1-01/52370
- US-A1- 2001 010 698
- RADZEWICZ C ET AL: "Short pulse nonlinear frequency conversion without group-velocity-mismatch broadening" OPTICS COMMUNICATIONS, NORTH-HOLLAND PUBLISHING CO. AMSTERDAM, NL LNKD- DOI:10.1016/0030-4018(95)00103-F, vol. 117, no. 3, 1 June 1995 (1995-06-01), pages 295-302, XP004011758 ISSN: 0030-4018

## Description

This invention relates to the field of laser technology and is designed to combine laser beams from several initial laser sources, propagating in an optical nonlinear medium into a single laser beam of higher frequency and of higher pulse energy. The invention can be used in laser material processing technology, when high average power/energy of generated laser pulses, high laser pulse repetition frequency and short radiation wavelength optimally suited to process the materials is required. Laser beam quality should be good quite enough also.

There is possible to use several laser sources and to combine generated the radiation by all of them into a single beam in order to create a system, which would generate high energy laser pulses. The combination of several laser beams into a single beam could be performed, by means of special beam combiners placed in the path of propagating beams. To generate a beam, with the wavelength shorter than this of the original laser beam, it is necessary to use nonlinear optical conversion in nonlinear medium placed in it path of the combined beam. This method produces the beam of high pulse energy and short wavelength, however such a system is not very efficient and practical, because in a general case laser sources mutually are non-coherent and two separate devices are used - one to combine the beams, another one to generate shorter wavelength beam (for example, the second harmonic which, in the case of a non-coherently combined beam, has low efficiency).

In patent application WO 2004.068652 is disclosed a method and device for combining laser beams, where a single coherent laser beam is combined from many fiber laser beams. The combination of laser beams is performed in such a way that each fiber laser beam interacts with at least one another fiber laser beam in a way that forces the other fiber laser beams to change their main frequency and this way forms one coherent beam from many fiber laser beams (see patent application).

In the above described method and device for combining laser beams the resulting laser beam propagates through the fiber, therefore it is limited by fiber resistance to the pulse energy. This invention does not solve the low pulse energy problem.

In patent application WO 2001/052370 is disclosed a laser system which is designated to provide three different wavelengths using only two types of sources. Sum frequency mixing or frequency doubling is used to achieve the desired wavelengths. The two process wavelengths are summed (amplified) simultaneously within the same medium (non-linear optical crystal) which generates sum-frequency beam of a third wavelength.

Technical solution of this invention is to provide three different wavelengths using only two types of sources, where sum frequency mixing or frequency doubling is used to achieve the desired wavelengths. This invention does not solve the low pulse energy problem, which alow to obtain a single laser beam with higher energy output together with optical frequency higher than the optical frequencies of the beams that are being combined without any additional means.

In patent FR2811149 is disclosed a method and device for light beam combination, where three different wavelength laser beams are directed into a nonlinear optical medium, namely a parametric optical structure, which combines the passing laser beams into a single beam with a modified frequency.

In the above described method and device for light beam combination the essence of the parametric interaction is such that in the initial set of three different wavelengths beams, one beam wavelength must be equal to the wavelength of the "combined" beam. That is, to obtain beam of combined wavelength λₖ it is required the presence of this wavelength in the initial set of laser beams, and that is an important constraint. Another drawback of the known method and device is that the combined beam is of lower or the same frequency as the optical frequencies of the combined beams. That means, that one have to generate the fourth harmonic for obtaining a second harmonic or sum-frequency laser beam.

Further by described method when an optical parametric structure is used for light beam combination, in addition to the combined beam, secondary beams are generated; as a result the energy output of the combined light beam is reduced.

The aim of the invention is to create a method and a device for combining laser beams, which would enable to obtain a single laser beam with higher energy output without any additional means and optical frequency higher than the optical frequencies of the initial beams.

The problem can be solved by the method of laser beams combining, which comprises direction of the several initial laser beams into an optical nonlinear medium, in which the beam combination is performed obtaining a laser beam with a modified frequency, the optical nonlinear medium is second order nonlinear medium where the initial laser beams are summed in pairs by adding their frequencies, by using nonlinear interaction, to obtain a sum-frequency beams and the sum-frequency beams, at least two, by satisfying phase-matching condition are combined into a single beam within the same second order nonlinear medium.

The beams, combined according the proposed method, is a sum-frequency beams, which can be the second harmonic beam. Spectral filters for separation of the second harmonic or sum-frequency beam from the main harmonic radiation are not required in case of non-collinear second harmonic or sum-frequency generation in second order nonlinear medium. Beams propagating in different directions are easily separated in space. This method enables to increase the optical frequency (to shorten the wavelength) and power of the output beam in the same nonliniear medium without any additional means. The combination, harmonic generation and spectral beam separation are performed within a single element, i.e. nonlinear crystal (second order nonlinear medium).

Further, in the above laser beams combining, the summation and combination of beams is performed simultaneously in a single second order nonlinear medium. In this case the number of beams is constrained only by the aperture of a nonlinear crystal. This method of realization has advantages when combining laser beams of moderate average power (preferably up to 100 W for a single beam).

Further, in the above method of laser beams combining, the summation and combination of laser beams is performed sequentially in several stages in several places of the single second order nonlinear medium, where to each of said places at least one new pair of initial laser beams is directed, where said laser beams of each pair overlap and their frequencies are summed into sum-frquency beams accordingly, which sequentially are combined in such a way, that sum-frequency beam received in the first place of nonlinear medium is combined with another sum-frequency beam of another pair of initial beams in further place of nonlinear medium by receiving combined beam, which is combined sequentially in further place of said medium with another sum-frequency beam of another pair of initial beams by receiving another combined beam and so on up until all the initial beam pairs get summed and all the sum-frequency beams are combined into a single beam of the desired parameters.

Above described sequentially method of realization is preferable when combining laser beams of high average power (more than 100 W for a single beam), because it improves thermal regimes of the nonlinear crystals. The heat generated in zone of the beams crossing is evenly distributed through one or several nonlinear crystals (second order nonlinear media).

Further, another embodiment of the present invention is a method of laser beams combining, comprising direction of initial laser beams into a nonlinear medium, where the combination of beams is performed, obtaining a laser beam with the modified wavelength, wherein nonlinear medium is a sequence of separate second order nonlinear media arranged on the same optical axis where initial laser beams are summed in pairs at least one pair in each separate nonlinear medium, by adding their frequencies, by using nonlinear interaction, to obtain sum-frequency beams accordingly, obtained the sum-frequency beams by satisfying phase-matching condition are combined into a single beam within the sequence of separate second order nonlinear media.

Further, in the above method of laser beams combining, the one new pair of initial laser beams is directed to each one nonlinear medium (3', 3", 3"'... 3ⁿ) correspondingly, where beams of each pair overlap and their frequencies are summed into sum-frquency beams accordingly, which sequentially are combined in such a way, that sum-frequency beam received in the first nonlinear medium is combined with another sum-frequency beam of another pair of initial beams in further nonlinear medium by receiving in outlet first combined beam, which is combined sequentially in further nonlinear medium with another sum-frequency beam of another pair of initial beams in further nonlinear crystal by receiving second combined beam and so on up until all the initial beam pairs get summed and all the sum-frequency beams are combined into a single beam of the desired parameters.

Further, in the above method of laser beams combining, the said summation and combination of laser beams is performed by using mixed (sequential and simultaneous) method, where a several pairs of initial beams are directed to each of seperate second order nonlinear medium accordingly, where beams of each pair overlap and their frequencies are summed into sum-frequency beams accordingly, where sum-frequency beams in the first seperate medium, simultaneously are combined with each other by receiving first combined beam, which is combined sequentially in further seperate medium with another sum-frequency beams by receiving second combined beam and so on up until all the initial beam pairs get summed and all the sum-frequency beams are combined into a single beam of the desired parameters.

The mixed combination method is preferable when average power of several combined laser beams is high (e.g., above 200 W). In this case crystal aperture is optimally exploited by combining as many beams without exceeding 200 W average power in single nonlinear crystal and distributing the heat through several nonlinear crystals when higher than 200 W average power have to be obtained.

Moreover, in the above method of laser beams combining, simultaneously summed and combined initial laser beams are mutually non-collinear in any of the stages, however they may be collinear with the beams, in different sequential stages. In this case the initial beams that are being summed and the combined beam propagate in different directions. This makes the beam separation easier by allowing their free propagation in space.

Further, in the above method of combining laser beams, mutually non-coherent beams of equal wavelength are directed into a second order nonlinear medium (nonlinear crystal). In this case the second harmonic is generated..

Further, in the above method of combining laser beams, mutually non-coherent beams directed into a second order nonlinear medium (nonlinear crystal) may have different wavelengths. In this case is generated sum frequency.

Moreover, in the above method of laser beams combining, wavelengths of paired laser beams that are being summed are equal, however they differ from the wavelengths of beams that are sequentially summed in other pairs. In this case combined beam will have a combination of harmonics of different wavelengths.

Moreover, in the above method of laser beams combining, the wavelengths of paired laser beams that are being summed are different, however they do not differ from the wavelengths of beams that are sequentially summed in other pairs.

According to a further aspect of the present invention there is provided device for laser beam combination, comprising of several lasers, which beams are directed into an optical nonlinear medium, where the beam combination is performed, at the output obtaining a laser beam with a modified wavelength, the optical nonlinear medium is a second order nonlinear medium, in which laser beams are summed in pairs by adding their frequencies by using nonlinear interaction, to obtain sum-frequency beams, obtained the sum-frequency beams, at least two, are being combined into a single beam by satisfying phase-matching condition within the same second nonlinear medium.

Further, another aspect of the present invention is device for laser beam combination, comprising several lasers, which laser beams are directed into an optical nonlinear medium, which is used to perform the beam combination, at the output obtaining a laser beam with a modified wavelength, wherein the optical nonlinear medium is a second order nonlinear medium which comprises a sequence of separate second order nonlinear media arranged on the same optical axis, where the laser beams are summed in pairs, at least one pair in each separate nonlinear medium, by adding their frequencies and by using nonlinear interaction, to obtain sum-frequency beams accordingly, obtained the sum-frequency beams by satisfying phase-matching condition are combined into a single beam within the sequence of separate second order nonlinear media.

In further realization variant of invention said second order nonlinear medium comprises two separate second order nonlinear media in each of which are performed summation of two pairs of the laser beams and obtaining sum-frequency beams accordingly which are combined within nonlinear media to single beams accordingly, and two beam phase controllers are provided for phase control of at least one laser beam directed to each nonlinear medium accordingly to satisfy phase-matching condition in combining the sum-frequency laser beams to single beams.

Description of the drawings are presented for further explanation of invention.
Fig. 1 is a block scheme of the device for laser beams combination.
Fig.2 - are diagrams of
   (a) the amplitude-angular distribution of the four initial laser beams propagating at different angles and crossing each other in the second order nonlinear material to be combined in sum-frequency beam;
   (b-d) the amplitude-angular distribution of the sum-frequency light waves emitted by the nonlinear polarization wave.
   (b) case when the phases of the sum-frequency waves are equal;
   (c) case when the phases of the sum-frequency waves are opposite;
   (d) same as in (c), except one of the initial beams is closed.

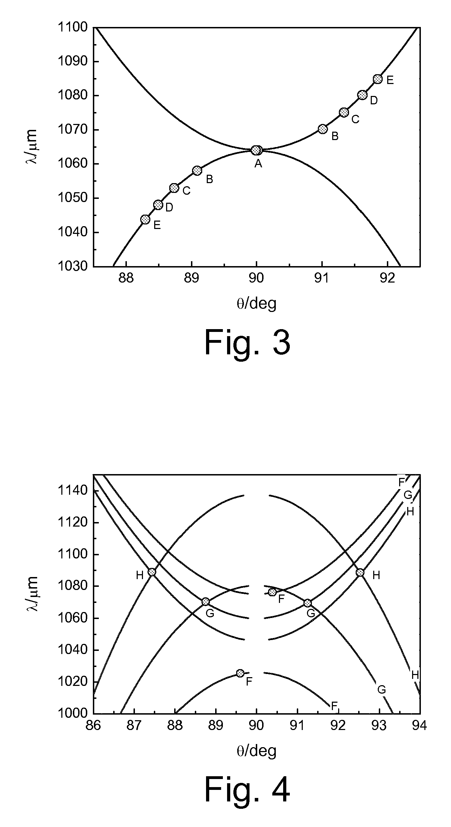

Fig. 3 is diagram of phase-matching curves of the coherent laser beams summation and combination in the second order nonlinear medium.
Fig. 4 is diagram of phase-matching curves of noncoherent light beams summation and combination in the second order nonlinear medium.

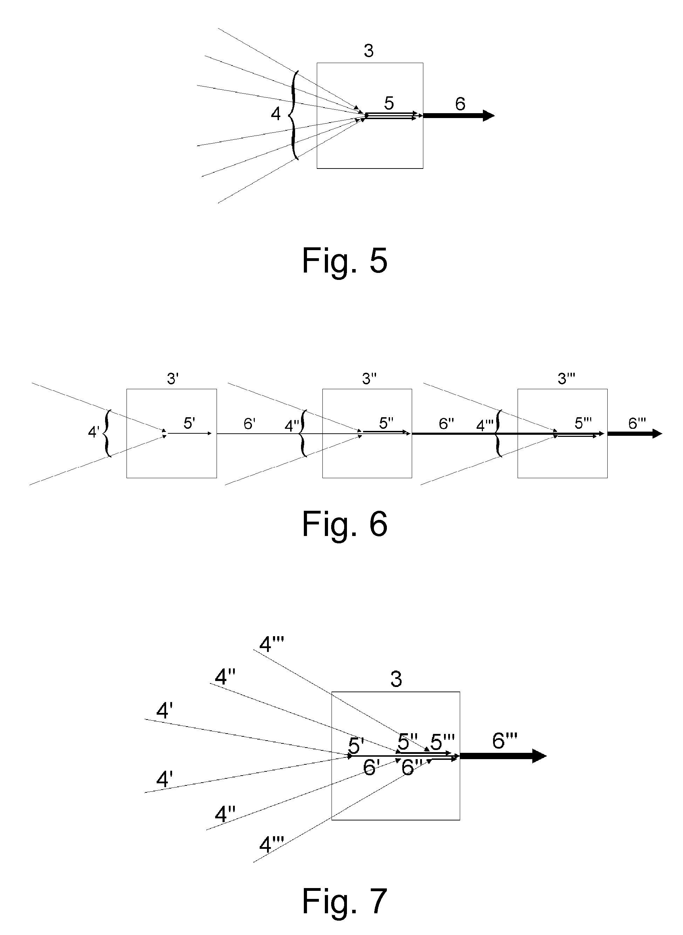

Fig. 5 is block diagram of simultaneous laser beams summation and combination in the second order nonlinear medium.
Fig. 6 is block diagram of sequential laser beams summation and combination in several second order nonlinear media.
Fig. 7 is block diagram of sequential laser beams summation and combination in a single second order nonlinear medium.

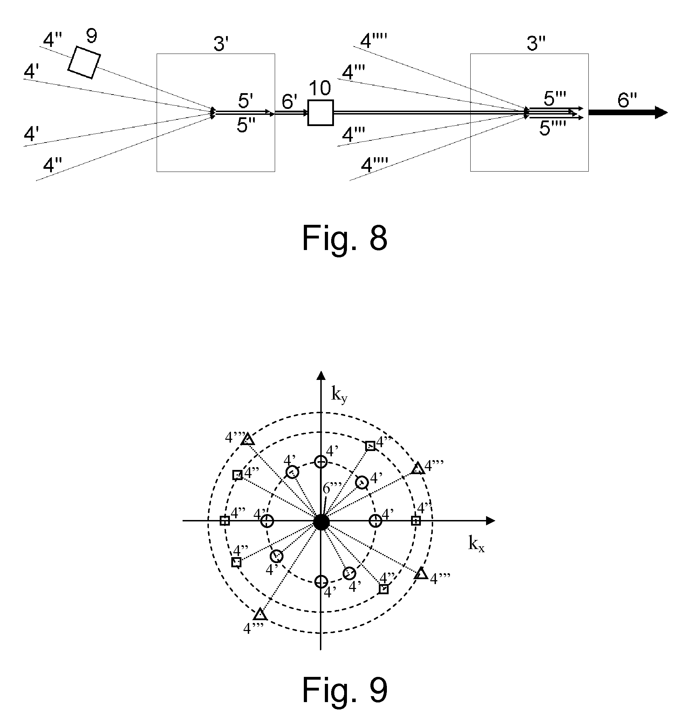

Fig. 8 is block diagram of mixed laser beams summation and combination in the second order nonlinear medium.
Fig. 9 - diagram of initial and combined beams angular distribution.

The method of laser beam combination comprises directing an even number of initial laser beams into the second order nonlinear medium (nonlinear crystal), where before directing into a nonlinear crystal, each initial beam is collimated, and then focused into a nonlinear crystal, where due to nonlinear interaction between the beams, the summation of beams is performed by adding the frequencies in pairs of the initial beams, and the sum-frequency beams, at least two, are combined into a single beam by satisfying the phase-matching condition in the same second order nonlinear medium.

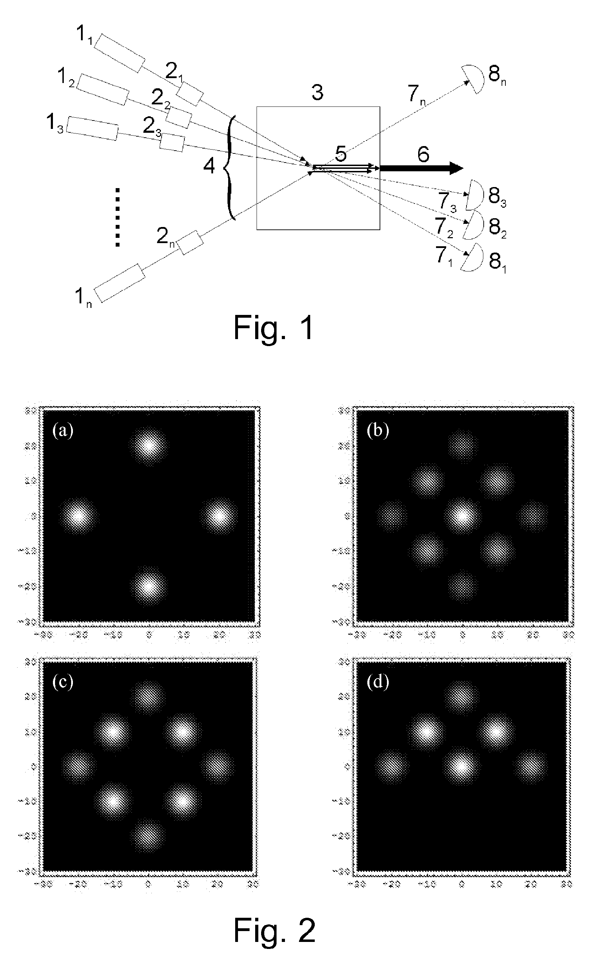

The device for combining laser beams (Fig. 1), which realizes the proposed method, has an even number of laser sources, preferably fiber lasers (1₁....1ₙ), the output beam of each is focused through a corresponding collimator (2₁....2ₙ) into a nonlinear crystal 3, which may be selected from KTP, LBO, DKDP nonlinear crystals, periodically oriented materials PPLN, PPKTP and other. The initial laser beams 4, directed into a nonlinear crystal 3, are mutually noncollinear and their propagation directions do not coincide with the propagation directions of the sum-frequency beams 5, which are being combined into a single output beam 6. Laser beams (7₁....7ₙ), with the propagation direction, which does not coincide with the direction of propagation of the combined beam 6, behind the nonlinear crystal 3 are stopped with the dumpers (8₁....8ₙ). Also laser beam phase controllers 9 and 10 are provided.

Two or more beams 4 respectively of two or more lasers (1₁....1ₙ), collimated and focused into a nonlinear crystal 3 in which the summation by using nonlinear interaction and combination of sum-frequency beams is performed, may be of the same or of different polarization. The beams 4 are summed in pairs in such a way that the sum-frequency beam 5 of each pair should be of the same or different frequency as the frequencies of the beams 5 generated by another pairs. All sum-frequency beams 5 propagate in the same direction and overlap in the near and far fields in such a way, that they form a common combined beam 6. Each pair of summed beams transfer its power efficiently into a sum-frequency beam because interaction satisfies the phase-matching condition. The phase-matching condition is realized in birefringent crystals, periodically oriented crystals, waveguide structures, periodically oriented waveguide structures, etc. In a general case, the beams 4, which undergo the summation, differs in the direction of propagation, so the propagation direction of some beams may coincide, and said beams may be of the same or different polarization.

Laser's (1₁....1ₙ) beams 4, with different propagation directions intersect in the second order nonlinear medium, i.e. nonlinear crystal 3, while forming certain light amplitude distribution (it can be presented like complex beam formed by the initial beams) (Fig.2). The amplitude distribution of the initial beams 4 in the second order nonlinear medium 3, due to the second order nonlinearity excite polarization waves of the sum-frequency, which have corresponding spatial amplitude distribution. Those polarization waves locally radiate sum-frequency waves, which make the corresponding spatial distribution of the amplitude. The spatial distribution of the amplitude is unambiguously related with the amplitude angular distribution (near and far fields). The angular distribution of sum-frequencies amplitude shows the directions, in which the sum-frequency waves might be generated. Angular amplitude distribution of light waves radiated by polarization waves at sum-frequencies is the first necessary condition for summing and combining light beams in the second order nonlinear medium. This distribution indicates directions, in which sum-frequency light waves may be generated and combined. Another necessary condition for laser beam summation and combination is phase-matching condition, which defines, which components of angular amplitude distribution of light waves at sum-frequency will be amplified.

Several methods for light beam summation and combination in the second order nonlinear medium are possible.

Coherent light beam summation and combination in the second order nonlinear medium. Two or more light beams having the same or different polarization are summed. In this case the beams are summed and combined in such a way, that the sum-frequencies and phases of the combined initial beams are equal. In a general case, the frequencies of the initial beams may be different, however the sum-frequencies of the pairs of the initial beams must be equal. The summed beams of equal frequency may have any phase, therefore it is necessary to apply active phase control of pump light beams and sum-frequency beams in order to ensure that the phase of the sum-frequency beams would be equal and they would be efficiently combined into a single beam. The phases of all summed beams must be equal in order to ensure that they interfere constructively and would form a common combined beam.

It is enough to control the phase of *N*-1 beams when performing coherent summation and combining of *2N* light beams or *N* pairs (N=1, 2, 3, ...) in the second order nonlinear medium (some of the beams, of those undergoing summation, may coincide and form a single beam). The phases of the pump beams or the phases of the sum-frequency beams can be controlled.

Using the said method the pulse energies of the light beams are summed. The spectral brightness of the combined beam is higher than that of the pump beams that undergo combination, and it is proportional to the number of beams *2N* that undergo combination.

In the case of coherent combination, when sum-frequencies of the initial lasers are equal and the phases of the sum-frequency beams are the same, the energy of the combined beam is proportional to the number of initial beams 2N. If sum-frequencies of the initial lasers are equal and the phases of the sum-frequency are random, then the maximum energy of the combined beam is proportional to the energy of all initial beams (energy of 2N beams), the minimum energy equals to zero, and the average energy of the combined beam is proportional to the energy of two initial beams. If phases of the pump or sum-frequency beams are not controlled, then the average energy of the combined beam is not higher than the energy of two initial beams, independently from how many light beams are being summed and combined.

The realization of this method (coherent light beam summation) requires very complex technical means in order to ensure long term functioning of a large number of, for instance, fiber lasers and maintain their mutual phase. Therefore the noncoherent process is significantly more practical.

Noncoherent (spectral) summation and combination of light beams in the second order nonlinear medium. Another situation is a noncoherent summation and combination of light beams in the second order nonlinear medium. And this is the case of our proposed solution.

Two or more light beams having the same or different polarization are summed. The pulses of independent fiber lasers of different wavelengths undergo summation. The beams are summed in pairs in such a way that the beams of sum-frequency should have the same or different frequency. All sum-frequency beams propagate in the same direction and overlap (overlap in the near and far fields) in such a way, that they form a common combined beam. Beams are combined in such a way, that each pair of the beams that undergo combination satisfies the phase-matching condition, and the combined beams are efficiently transformed into a sum-frequency beam. The phase-matching condition is realised in birefringent crystal, periodically poled media, waveguide structures, periodically poled waveguide structures, etc. In a general case, the pump beams that undergo summation, propagate in different directions. The direction of propagation of some beams may coincide, and possess same or different polarization. When noncoherent - spectral summation and combination of beams is performed in the second order nonlinear material it is not necessary to maintain the mutual phases of the light beams that undergo summation (mutual phases have no sense, because the sum beams that undergo combination have different frequencies). However the following condition has to be satisfied, the parametric amplification of the initial beams should be avoided as it exhausts the summed beams. In the case of noncoherent beam summation, this condition is satisfied only when the sum-frequencies of each pair do not coincide and for each pump beam, that is undergoing summation, the phase-matching condition of the parametric amplification is not satisfied for initial beams. The parametric interaction does not take place between different sum-frequency waves and pump beams, as result combined is not attenuated. The frequencies of the initial pairs of beams, which does not generate the combined beam (propagate in different direction than the combined beam, or do not overlap in space with the combined beam), can coincide, as those pairs do not take part in the combination of beams and because the phase-matching conditions are not satisfied for those pairs, indeed these are not amplified.

In contrast to the case of coherent pair combination in the second order nonlinear medium, the spectral brightness of the noncoherently combined sum-frequency beam is not higher than this of pump beams. Only the pulse energy of beams is combined. The said method is used to sum the energies of light beams, however the spectral brightness after addition of the beams does not increase.

The third variation is possible - that is mixed (coherent and noncoherent) light beam summation and combination in the second order nonlinear medium. In the mixed case of light beam summation and combination the beams with the same and different sum-frequencies are combined. Active phase control is applied for the pairs of pump beams, which have same sum-frequencies.

As an example, (Fig.3) shows the phase-matching curves for the coherent summation and combination of light beams in the second order nonlinear medium. The second order nonlinear medium is a KTP bulk crystal, in this particular case the phase-matching condition is realized in the birefringent second order nonlinear crystal of θ=90° and ϕ=24° cut. The nonlinear interaction of type II is realised, therefore the polarizations of the pairs of the beams that undergo combination, are orthogonal. The pair of phase-matching curves indicates a possible relationship between the wavelengths of the pump beams and their propagation directions, in order to ensure coherent combination of light beams into a single beam. The circles mark five possible pairs of pump beams. Random wavelengths of pump beams are chosen as an illustration. As it can be seen, all pump beams, except pair A, have different frequencies. However the combined beam consists of five sum-frequency beams with equal wavelengths of 532 nm. The sum frequencies of all pump pairs are equal, even though pump pairs consist of beams with different frequencies. Phase control is in this case is required.

The combined beam propagates in the direction, angle coordinates of which are θ=90° and ϕ=24°.

Another example (Fig. 4) illustrates phase-matching curves of noncoherent light beam summation and combination in the second order nonlinear medium. As in the previous example, the second order nonlinear medium is a KTP bulk crystal. Each pair of phase-matching curves indicates a possible relationship between the wavelengths of the pump beams and their propagation directions, in order to ensure a noncoherent combination of light beams into a single beam. Each pump pair corresponds to a certain pair of phase-matching curves. Wavelengths, corresponding to a certain pair of phase-matching curves, correspond to the certain sum-frequency wavelength. The combined beam consists of three sum-frequency beams, with the corresponding wavelengths of 525 nm, 535 nm and 545 nm. For a noncoherent summation and combination of light beams, there cannot be more that one pump pair corresponding to one pair of phase-matching curves, in order to avoid multiple sum-frequency beams of the same frequency (for one pair of phase-matching curves several pump beam frequency combinations can be realized resulting in the same sum-frequency). In the case of a noncoherent summation and combination of light beams, the sum-frequencies for all the pairs of the initial beams must be different. The combined beam propagates in the direction, with angle coordinates which are θ=90° and ϕ=24°.

Simultaneous combination of sum-frequency beams in the second order nonlinear medium. Simultaneous sum-frequency combination is a combination, when the initial beams 4 are summed in pairs and, at the same time, the sum-frequency beams 5 are combined into a single laser light beam 6 (Fig. 5). The summation in pairs of the initial beams 4 and the combination of the sum-frequency beams 5 take place simultaneously, in the same second order nonlinear medium 3.
Fig. 6 illustrates sequential summation and combination of laser beams in several stages by using several separate second order nonlinear media 3', 3", 3"', ..., 3ⁿ to each of which a new pair of initial beams 4', 4", 4"', ..., 4ⁿ is directed accordingly, where beams of each pair overlap and their frequencies are summed into sum-frquency beams 5', 5", 5"', ..., 5ⁿ accordingly. In the first non linear medium 3' frequencies of initial beams 4' are summed only by receiving sum-frequency beam 5', which corresponds with outgoing beam 6'. Combination of sum-frequency beams begins in further nonlinear medium 3" in which sum-frequency beam (5', 6'), generated by non-linear medium 3', is combined with another sum-frequency beam 5" of another pair of initial beams 4" in second nonlinear medium 3" by receiving in outlet combined beam 6", which is combined sequentially in further nonlinear medium 3'" with another sum-frequency beam 5'" of another pair of initial beams 4'" in further nonlinear crystal 3'" by receiving combined beam 6'" and so on up until all the initial beam pairs get summed and all the sum-frequency beams are combined into a single beam of the desired parameters.

Fig. 7 illustrates sequential summation and combination of laser beams in several stages in several places of one second order nonlinear medium 3, where to each of said places a new pair of initial beams 4', 4", 4"', ..., 4ⁿ is directed, where beams of each pair overlap and their frequencies accordingly are summed into sum-frquency beams 5', 5", 5"', ..., 5ⁿ. In the first place of non linear medium 3'frequencies of initial beams 4' are summed only. The sum-frequency beam 5' generated in the first place of nonlinear medium 3 corresponds with outgoing beam 6' which is combined with another sum-frequency beam 5" of another pair of initial beams 4" in further place of nonlinear medium 3 by receiving combined beam 6", which is combined sequentially in further place of said medium 3 with another sum-frequency beam 5" of another pair of initial beams 4'" by receiving combined beam 6'" and so on up until all the initial beam pairs get summed and all the sum-frequency beams are combined into a single beam of the desired parameters.

The mixed combination of sum-frequencies is a combination, when the sum-frequency beams of the initial beams, that undergo summation in pairs, are combined simultaneously and sequentially. The mixed combination of the sum-frequencies is possible only when at least three pairs of initial beams are being summed and combined.

Fig. 8 shows the diagram of mixed summation and combination of the light beams in two separate second order nonlinear media 3', 3". In the first second order nonlinear medium 3', two pairs of initial beams 4', 4" are coherently and simultaneously summed to sum-frequency beams 5' and 5" accordingly. Since sum-frequencies of both pairs are the same, the phase of a single initial beam is controlled by laser beam phase controller 9, in order to ensure that both sum-frequency beams are of the same phase and to ensure that they interfere constructively. The first nonlinear media 3' generates combined beam 6'. In the next second order nonlinear medium 3", another two pairs of initial beams 4"', 4"" are summed to sum-frequency beams 5"', 5"", which are combined together simultaneously and with the previously combined sum-frequency beam 6', they are combined sequentially. In the second medium 3", the sum-frequency of one pair of the initial beams 4"', 4"' coincides with the sum-frequency of beam 6' which was earlier combined in the first medium 3', therefore it is necessary to control beam phase by the beam phase controller 10. In this case, the phase of the combined sum-frequency beam 6' is controlled. Undoubtedly, it is possible to control the phase of any other initial beams 4'" or 4"" that are summed in pair, in the second order nonlinear medium 3". The outgoing combined beam 6" consists of four sum-frequency beams, with the frequencies of three beams are equal.

The summation and combination of beams is performed in the second order nonlinear medium by summing beams in pairs into a sum-frequency beams and combining those sum-frequency beams into a single sum-frequency beam. The summation and combination of beams in the second order nonlinear medium can be coherent and noncoherent (i.e. spectral). In the case beams are summed and combined coherently, the sum-frequencies and phases of the summed pairs of pump beams are equal. In the noncoherent case all sum-frequency beams, which make the combined beam, are of different frequencies.

The sum-frequency beams of initial beam pairs can be combined simultaneously and sequentially. The simultaneous sum-frequency combination is a combination, when the several pairs of initial beams are summed are combined into a single light beam simultaneously. The sequential sum-frequency combination is a combination, when one pair of pump beams is summed into a sum-frequency beam, then this sum-frequency beam is combined with another sum-frequency beam of another pump pair, and so on until all pump pairs get summed and all the sum-frequency beams are combined into a single beam.
The summation and combination of beams in the second order nonlinear medium is possible, when no less than two pairs of initial beams (four beams) are summed and combined, or when one pair of initial beams is summed and it is combined with another light beam which overlaps (in the far and near fields) with the sum-frequency beam. One pair of initial beams can only be summed (vector or scalar sum-frequency or second harmonic generation), but it is not combined with anything. There must be another beam with which the sum-frequency beam is being combined.

## Claims

1. Method of laser beams combining, comprising direction of several initial laser beams into a nonlinear medium, where the combination of beams is performed, obtaining a laser beam with the modified wavelength, **characterized in that** the nonlinear medium is a second order nonlinear medium, where the initial laser beams are summed in pairs by adding their frequencies, by using nonlinear interaction, to obtain a sum-frequency beams, and the sum-frequency beams, at least two, by satisfying phase-matching condition are combined into a single beam within the same second order nonlinear medium (3).

2. Method according to claim 1, **characterized in that** the said summation and combination of laser beams is performed simultaneously in a single second order nonlinear medium (3).

3. Method according to claim **1, characterized in that** the said summation and combination of laser beams is performed sequentially in several stages in several places of the single second order nonlinear medium (3), where to each of said places at least one new pair of initial laser beams (4', 4", 4"', ..., 4.ⁿ) is directed, where said laser beams of each pair overlap and their frequencies are summed into sum-frquency beams (5', 5", 5"', ..., 5ⁿ) accordingly, which sequentially are combined in such a way, that sum-frequency beam (5' or 6') received in the first place of nonlinear medium (3) is combined with another sum-frequency beam (5") of another pair of initial beams (4") in further place of nonlinear medium (3) by receiving combined beam (6"), which is combined sequentially in further place of said medium (3) with another sum-frequency beam (5"') of another pair of initial beams (4"') by receiving combined beam (6"') and so on up until all the initial beam pairs get summed and all the sum-frequency beams are combined into a single beam of the desired parameters.

4. Method of laser beams combining, comprising direction of initial laser beams into a nonlinear medium, where the combination of beams is performed, obtaining a laser beam with the modified wavelength, **characterized in that** the nonlinear medium is a sequence of separate second order nonlinear media (3', 3", ...3ⁿ) arranged on the same optical axis, where initial laser beams (4', 4", ...4ⁿ) are summed in pairs, at least one pair in each separate nonlinear medium (3', 3", ...3ⁿ) by adding their frequencies, by using nonlinear interaction, to obtain sum-frequency beams (5', 5", ...5ⁿ) accordingly, obtained the sum-frequency beams (5', 5", ...5ⁿ) by satisfying phase-matching condition are combined into a single beam (6ⁿ) within the sequence of separate second order nonlinear media (3', 3", ...3ⁿ).

5. Method according to claim 4, **characterized in that** the one new pair of initial laser beams (4', 4", 4"'... 4ⁿ) is directed to each one nonlinear medium (3', 3", 3"'... 3ⁿ) correspondingly where beams of said each pair overlap and their frequencies are summed into sum-frquency beams (5', 5", 5"', ..., 5ⁿ) accordingly, which sequentially are combined in such a way, that sum-frequency beam (5' or 6') received in the first nonlinear medium (3') is combined with another sum-frequency beam (5") of another pair of initial beams 4" in further nonlinear medium (3") by receiving in outlet combined beam (6"), which further is combined sequentially in further nonlinear medium (3"') with another sum-frequency beam (5"') of another pair of initial beams (4"') by receiving combined beam (6"') and so on up until all the initial beam pairs get summed and all the sum-frequency beams are combined into a single beam of the desired parameters.

6. Method according to claim 4, **characterized in that** a several pairs of initial beams (4', 4"), (4"', 4"") are directed to each of said seperate second order nonlinear medium, (3', 3", 3",... 3ⁿ) accordingly, where beams of each pair overlap and their frequencies are summed into sum-frequency beams (5', 5"), (5"', 5"") accordingly, where sum-frequency beams (5', 5") in the first seperate medium (3'), simultaneously are combined with each other by receiving combined beam (6'), which is combined sequentially in further seperate medium (3"), with another sum-frequency beams (5"', 5"") by receiving combined beam (6") and so on up until all the initial beam pairs get summed and all the sum-frequency beams are combined into a single beam (6ⁿ) of the desired parameters.

7. Method according to any of the claims 3-6, **characterized in that** the said initial laser beams (4.. 4ⁿ) summed in pairs to the sum-frequence beams (5...5ⁿ), which are combined simultaneously to laser beams (6...6ⁿ) are noncollinear, however they may be collinear with the beams(4'..4ⁿ⁺¹), summed sequentially in other stages.

8. Method according to any of the previous claims, **characterized in that** mutually noncoherent initial laser beams (4..4ⁿ) having the same wavelengths are directed into a second order nonlinear medium (3..3ⁿ) accordingly.

9. Method according to claim 8, **characterized in that** in the second order nonlinear medi*a (3 ..**3ⁿ** )* the sum-frequency generated by the pairs of laser beams (4 ..4ⁿ ) is the second harmonic.

10. Method according to any of the claims 1-7, **characterized in that** mutually noncoherent initial laser beams (4..4ⁿ) directed into a nonlinear second order nonlinear medium (3..3ⁿ) may have different wavelengths.

11. Method according to claim 10, **characterized in that** the wavelengths of paired laser beams (4..4ⁿ) that are beeing summed are equal, however they differ from the wavelengths of beams (4'..4ⁿ⁺¹) that are sequentially summed in other pairs respectively.

12. Method according to claim 10, **characterized in that** the wavelengths of paired laser beams (4..4ⁿ) that are being summed are different, however they do not differ from the wavelengths of beams (4'..4ⁿ⁺¹) that are being sequentially summed in other pairs respectively.

13. Device for laser beam combination, comprising several lasers , which beams (4) are directed into an optical nonlinear medium, which is used to perform the beam combination, at the output obtaining a laser beam with a modified wavelength, **characterized in that** the optical nonlinear medium is a second order nonlinear medium (3) in which the laser beams (4) are summed in pairs by adding their frequences and by using nonlinear interaction, to obtain a sum-frequency beams (5), obtained the sum-frequency beams (5), at least two, are being combined into a single beam (6) by satisfying the phase -matching condition within the same second nonlinear medium (3).

14. Device for laser beam combination, comprising several lasers, which laser beams (4) are directed into an optical nonlinear medium, which is used to perform the beam combination, at the output obtaining a laser beam with a modified wavelength, **characterized in that** the optical nonlinear medium is sequence of separate second order nonlinear media (3', 3", ...3ⁿ) arranged on the same optical axis, where the laser beams (4', 4", ...4ⁿ) are summed in pairs, at least one pair in each separate nonlinear medium (3', 3", ...3ⁿ), by adding their frequencies and by using nonlinear interaction, to obtain sum-frequency beams (5', 5", ...5ⁿ) accordingly, obtained the sum-frequency beams (5', 5", ...5ⁿ) by satisfying phase-matching condition are combined into a single beam 6ⁿ within the sequence of separate second order nonlinear media (3', 3", ...3ⁿ).

15. Device according to claims 14, **characterized in that** said second order nonlinear medium comprises two separate second order nonlinear media (3', 3") in each of which are performed summation of two pairs of the laser beams (4', 4") and (4"', 4""), obtaining sum-frequency beams (5', 5") and (5"', 5"") accordingly which are combined within nonlinear media (3', 3"), to single beams (6', 6") accordingly, and two beam phase controllers (9, 10) are provided for phase control of at least one laser beam directed to each nonlinear medium (3', 3") accordingly to satisfy phase-matching condition in combining the sum-frequency laser beams to single beams (6', 6").

## Patentansprüche

1. Verfahren zur Bündelung von Laserstrahlen, umfassend das Leiten mehrerer anfänglicher Laserstrahlen in ein nichtlineares Medium, in dem die Bündelung von Strahlen durchgeführt wird, Erhalten eines Laserstrahls mit modifizierter Wellenlänge, **dadurch gekennzeichnet, dass**
das nichtlineare Medium ein nichtlineares Medium zweiter Ordnung ist, bei dem die anfänglichen Laserstrahlen paarweise durch Addition ihrer Frequenzen unter Verwendung von nichtlinearer Wechselwirkung zusammengefasst werden, um Summenfrequenzstrahlen zu erhalten und wenigstens zwei der Summenfrequenzstrahlen durch Erfüllung der Phasenanpassungsbedingung zu einem einzigen Strahl innerhalb desselben nichtlinearen Mediums (3) zweiter Ordnung gebündelt werden.

2. Verfahren nach Anspruch 1, **dadurch gekennzeichnet, dass**
die genannte Zusammenfassung und Bündelung von Laserstrahlen gleichzeitig in einem einzigen nichtlinearen Medium (3) zweiter Ordnung durchgeführt wird.

3. Verfahren nach Anspruch 1, **dadurch gekennzeichnet, dass**
die genannte Zusammenfassung und Bündelung von Laserstrahlen sequenziell in mehreren Schritten an mehreren Orten des einzigen nichtlinearen Mediums (3) zweiter Ordnung durchgeführt wird, wobei zu jedem der genannten Orte wenigstens ein neues Paar anfänglicher Laser Strahlen (4', 4", 4"', ..., 4ⁿ) geleitet wird, wobei die genannten Laserstrahlen jedes Paares sich überschneiden und ihre Frequenzen entsprechend zu Summenfrequenzstrahlen (5', 5", 5"', ..., 5ⁿ) zusammengefasst werden, die sequenziell so gebündelt werden, dass der Summenfrequenzstrahl (5' oder 6'), der zunächst vom nichtlinearen Medium (3) empfangen wird, mit einem anderen Summenfrequenzstrahl (5") eines anderen Paares anfänglicher Laserstrahlen (4") an einem weiteren Ort des nichtlinearen Mediums (3) gebündelt wird, erhaltend einen gebündelten Strahl (6"), der sequenziell in einem weiteren Ort des genannten Mediums (3) mit einem anderen Summenfrequenzstrahl (5"') eines anderen Paares anfänglicher Laserstrahlen (4"') gebündelt wird, erhaltend einen gebündelten Strahl (6"') usw., bis alle anfänglichen Strahlenpaare zusammengefasst und alle Summenfrequenzstrahlen zu einem einzigen Strahl mit den gewünschten Parametern gebündelt wurden.

4. Verfahren zur Bündelung von Laserstrahlen, umfassend das Leiten anfänglicher Laserstrahlen in ein nichtlineares Medium, in dem die Bündelung der Strahlen durchgeführt wird, Erhalten eines Laserstrahls mit modifizierter Wellenlänge, **dadurch gekennzeichnet, dass**
das nichtlineare Medium eine Sequenz von separaten nichtlinearen Medien (3', 3", ..., 3ⁿ) zweiter Ordnung auf der gleichen optischen Achse ist, wobei die anfänglichen Laserstrahlen (4', 4", ..., 4ⁿ) paarweise durch Addition ihrer Frequenzen unter Verwendung von nichtlinearer Wechselwirkung zusammengefasst werden, wenigstens ein Paar in jedem separaten nichtlinearen Medium (3', 3", ..., 3ⁿ), um entsprechende Summenfrequenzstrahlen (5', 5", ..., 5ⁿ) zu erhalten und die erhaltenen Summenfrequenzstrahlen (5', 5", ..., 5ⁿ) durch Erfüllen der Phasenanpassungsbedingung zu einem einzigen Strahl (6ⁿ) innerhalb der Sequenz separater nichtlinearer Medien (3', 3", ..., 3ⁿ) zweiter Ordnung gebündelt werden.

5. Verfahren nach Anspruch 4, **dadurch gekennzeichnet, dass**
das eine neue Paar anfänglicher Laserstrahlen (4', 4", 4"', ..., 4ⁿ) entsprechend zu jedem nichtlinearen Medium geleitet wird (3', 3", 3"',..., 3ⁿ), wobei sich die Strahlen jedes Paares überschneiden und ihre Frequenzen entsprechend zu Summenfrequenzstrahlen (5', 5", 5'", ..., 5ⁿ) zusammengefasst werden, die sich sequenziell so bündeln, dass der Summenfrequenzstrahl (5' oder 6'), der von dem ersten nichtlinearen Medium (3') empfangen wird mit einem anderen Summenfrequenzstrahl (5") eines anderen Paares anfänglicher Strahlen (4") in einem weiteren nichtlinearen Medium (3") gebündelt wird, wodurch beim Austritt ein gebündelter Strahl (6") empfangen wird, der weiterhin sequenziell in einem weiteren nichtlinearen Medium (3"') mit einem anderen Summenfrequenzstrahl (5"') eines anderen Paares anfänglicher Laserstrahlen (4"') gebündelt wird, erhaltend einen gebündelten Strahl (6"') usw., bis alle Paare anfänglicher Strahlen zusammengefasst sind und alle Summenfrequenzstrahlen zu einem einzigen Strahl mit den gewünschten Parametern gebündelt wurden.

6. Verfahren nach Anspruch 4, **dadurch gekennzeichnet, dass** mehrere Paare anfänglicher Strahlen (4', 4"), (4"', 4"") entsprechend zu jedem einzelnen der nichtlinearen Medien (3', 3", 3"', ..., 3ⁿ) geleitet werden, wobei die Strahlen jedes Paares sich überschneiden und ihre Frequenzen zu Summenfrequenzstrahlen (5', 5"), (5"', 5"") entsprechend zusammengefasst werden, wobei die Summenfrequenzstrahlen (5', 5") in dem ersten separaten Medium (3') gleichzeitig miteinander gebündelt werden und ein gebündelter Strahl (6') empfangen wird, der in einem weiteren separaten Medium (3") sequenziell mit anderen Summenfrequenzstrahlen (5"', 5"") gebündelt wird, erhaltend einen gebündelten Strahl (6") usw., bis alle Paare anfänglicher Strahlen zusammengefasst wurden und alle Summenfrequenzstrahlen zu einem einzigen Strahl (6ⁿ) mit den gewünschten Parametern gebündelt wurden.

7. Verfahren nach einem der Ansprüche 3 bis 6, **dadurch gekennzeichnet, dass**
die genannten anfänglichen Laserstrahlen (4 ... 4ⁿ), die in Paaren zu den Summenfrequenzstrahlen (5 ... 5ⁿ) zusammengeführt werden, die gleichzeitig zu Laserstrahlen (6 ... 6ⁿ) gebündelt werden nichtlinear sind, jedoch kollinear zu den Strahlen (4'... 4ⁿ⁺¹), die sequenziell in anderen Etappen zusammengefasst werden, sein können.

8. Verfahren nach einem der vorangehenden Ansprüche, **dadurch gekennzeichnet, dass** inkohärente anfängliche Laserstrahlen (4 ... 4ⁿ) mit den gleichen Wellenlängen entsprechend in ein nichtlineares Medium (3 ... 3ⁿ) zweiter Ordnung geleitet werden.

9. Verfahren nach Anspruch 8, **dadurch gekennzeichnet, dass**
in den nichtlinearen Medien (3 ... 3ⁿ) zweiter Ordnung die von den Laserstrahlpaaren (4 ... 4ⁿ) gebildete Summenfrequenz die Oberwelle ist.

10. Verfahren nach einem der Ansprüche 1 bis 7, **dadurch gekennzeichnet, dass** inkohärente anfängliche Laserstrahlen (4 ... 4ⁿ), die in ein nichtlineares Medium (3 ... 3ⁿ) zweiter Ordnung geleitet werden, verschiedene Wellenlängen haben können.

11. Verfahren nach Anspruch 10, **dadurch gekennzeichnet, dass**
die Wellenlängen der Laserstrahlpaare (4 ... 4ⁿ), die zusammengefasst werden gleich sind, sich jedoch von den Wellenlängen der Strahlen (4'... 4ⁿ⁺¹), die sequenziell in jeweils anderen Etappen zusammengefasst werden, unterscheiden.

12. Verfahren nach Anspruch 10, **dadurch gekennzeichnet, dass**
die Wellenlängen der Laserstrahlpaare (4 ... 4ⁿ), die zusammengefasst werden, unterschiedlich sind, sich jedoch nicht von den Wellenlängen jener Strahlen (4' ... 4ⁿ⁺¹) unterscheiden, die sequenziell in jeweils anderen Etappen zusammengefasst werden.

13. Vorrichtung zur Bündelung von Laserstrahlen, umfassend mehrere Laser, deren Strahlen (4) in ein optisch nichtlineares Medium geleitet werden, das zur Durchführung der Strahlenbündelung eingesetzt wird und einen Laserstrahl mit einer modifizierten Wellenlänge zum Ergebnis hat,
**dadurch gekennzeichnet, dass**
das optisch nichtlineare Medium ein nichtlineares Medium zweiter Ordnung ist, in dem die Laserstrahlen (4) durch Addition ihrer Frequenzen und unter Verwendung nichtlinearer Wechselwirkung paarweise zusammengefasst werden, um einen Summenfrequenzstrahl (5) zu erhalten, von denen wenigstens zwei Summenfrequenzstrahlen zu einem einzigen Strahl (6) gebündelt werden, indem die Phasenanpassungsbedingung innerhalb des nichtlinearen Mediums (3) zweiter Ordnung erfüllt wird.

14. Vorrichtung zur Bündelung von Laserstrahlen, umfassend mehrere Laser, deren Laserstrahlen (4) in ein optisch nichtlineares Medium geleitet werden, das zur Durchführung der Strahlenbündelung eingesetzt wird und einen Laserstrahl mit einer modifizierten Wellenlänge zum Ergebnis hat,
**dadurch gekennzeichnet, dass**
das optisch nichtlineare Medium eine Sequenz auf der gleichen optischen Achse angeordneter separater nichtlinearer Medien (3', 3", ..., 3ⁿ) zweiter Ordnung ist, wobei die Laserstrahlen (4', 4", ..., 4ⁿ) in Paaren zusammengefasst werden, wenigstens ein Paar in jedem separaten nichtlinearen Medium (3', 3", ..., 3ⁿ), indem ihre Frequenzen addiert werden und nichtlineare Wechselwirkung eingesetzt wird, um dementsprechend Summenfrequenzstrahlen (5', 5", ..., 5ⁿ) zu erhalten, welche Summenfrequenzstrahlen (5', 5", ..., 5ⁿ) durch Erfüllung der Phasenanpassungsbedingung zu einem einzelnen Strahl (6ⁿ) innerhalb der Sequenz der separaten nichtlinearen Medien (3', 3", ..., 3ⁿ) zweiter Ordnung gebündelt werden.

15. Vorrichtung nach Anspruch 14, **dadurch gekennzeichnet, dass**
das genannte nichtlineare Medium zweiter Ordnung zwei separate nichtlineare Medien (3', 3") zweiter Ordnung umfasst, in denen jeweils die Zusammenfassung zweier Laserstrahlpaare (4', 4") und (4"', 4"") durchgeführt wird und Summenfrequenzstrahlen (5', 5") und (5"', 5"") entsprechend erhalten werden, die innerhalb der nichtlinearen Medien (3', 3") entsprechend zu einzelnen Strahlen (6', 6") gebündelt werden und zwei Strahlenphasenprüfer (9, 10) vorgesehen sind, zur Phasenprüfung des wenigstens einen Laserstrahls, der zu einem nichtlinearen Medium (3', 3") entsprechend geleitet wird, um die Phasenanpassungsbedingung zu erfüllen, indem die Summenfrequenzlaserstrahlen zu einzelnen Strahlen (6', 6") gebündelt werden.

## Revendications

1. Procédé de combinaison de faisceaux laser, comprenant l'application de plusieurs faisceaux laser initiaux dans un milieu non linéaire, où la combinaison de faisceaux est effectuée, obtenant un faisceau laser avec la longueur d'onde modifiée, **caractérisé en ce que** le milieu non linéaire est un milieu non linéaire du deuxième ordre, où les faisceaux laser initiaux sont sommés par paires en additionnant leurs fréquences, en utilisant une interaction non linéaire, pour obtenir des faisceaux de fréquence de somme, et les faisceaux de fréquence de somme, au moins deux, en satisfaisant à une condition d'adaptation de phase, sont combinés en un faisceau unique dans le même milieu non linéaire du deuxième ordre (3).

2. Procédé selon la revendication 1, **caractérisé en ce que** lesdites sommation et combinaison de faisceaux laser sont effectuées simultanément dans un milieu non linéaire du deuxième ordre (3) unique.

3. Procédé selon la revendication 1, **caractérisé en ce que** lesdites sommation et combinaison de faisceaux laser sont effectuées séquentiellement dans plusieurs étages à plusieurs emplacements du milieu non linéaire du deuxième ordre (3) unique, où au moins une nouvelle paire de faisceaux laser initiaux (4', 4", 4'", ..., 4ⁿ) est dirigée vers chacun desdits emplacements, où lesdits faisceaux laser de chaque paire se superposent et leurs fréquences sont sommées en des faisceaux de fréquence de somme (5', 5", 5"' , ..., 5ⁿ) en conséquence, lesquels sont combinés séquentiellement d'une manière telle que le faisceau de fréquence de somme (5' ou 6') obtenu au premier emplacement du milieu non linéaire (3) est combiné avec un autre faisceau de fréquence de somme (5") d'une autre paire de faisceaux initiaux (4") à un autre emplacement du milieu non linéaire (3) en obtenant le faisceau combiné (6"), qui est combiné séquentiellement à un autre emplacement dudit milieu (3) avec un autre faisceau de fréquence de somme (5" ') d'une autre paire de faisceaux initiaux (4"') en obtenant le faisceau combiné (6"') et ainsi de suite jusqu'à ce que toutes les paires de faisceaux initiaux soient sommées et que tous les faisceaux de fréquence de somme soient combinés en un faisceau unique ayant les paramètres souhaités.

4. Procédé de combinaison de faisceaux laser, comprenant l'application de faisceaux laser initiaux dans un milieu non linéaire, où la combinaison de faisceaux est effectuée, obtenant un faisceau laser avec la longueur d'onde modifiée, **caractérisé en ce que** le milieu non linéaire est une séquence de milieux non linéaires du deuxième ordre (3' , 3" , ..., 3ⁿ) séparés agencés sur le même axe optique, où les faisceaux laser initiaux (4', 4", ..., 4ⁿ) sont sommés par paires, au moins une paire dans chaque milieu non linéaire (3', 3", ..., 3ⁿ) séparé en additionnant leurs fréquences, en utilisant une interaction non linéaire, pour obtenir les faisceaux de fréquence de somme (5', 5", ..., 5ⁿ) en conséquence, les faisceaux de fréquence de somme (5', 5", ..., 5ⁿ) obtenus en satisfaisant à une condition d'adaptation de phase sont combinés en un faisceau unique (6ⁿ) dans la séquence de milieux non linéaires du deuxième ordre (3', 3", ..., 3ⁿ) séparés.

5. Procédé selon la revendication 4, **caractérisé en ce que** ladite nouvelle paire de faisceaux laser initiaux (4', 4", 4"', ..., 4ⁿ) est appliquée à chaque milieu non linéaire (3', 3", 3"', ..., 3ⁿ) en correspondance, où les faisceaux de chaque dite paire se superposent et leurs fréquences sont sommées en les faisceaux de fréquence de somme (5', 5", 5"', ..., 5ⁿ) en conséquence, lesquels sont combinés séquentiellement d'une manière telle que le faisceau de fréquence de somme (5' ou 6') obtenu dans le premier milieu non linéaire (3') est combiné avec un autre faisceau de fréquence de somme (5") d'une autre paire de faisceaux initiaux (4") dans un autre milieu non linéaire (3") en obtenant en sortie le faisceau combiné (6"), qui est en outre combiné séquentiellement dans un autre milieu non linéaire (3"') avec un autre faisceau de fréquence de somme (5"') d'une autre paire de faisceaux initiaux (4"') en obtenant le faisceau combiné (6"') et ainsi de suite jusqu'à ce que toutes les paires de faisceaux initiaux soient sommées et que tous les faisceaux de fréquence de somme soient combinés en un faisceau unique ayant les paramètres souhaités.

6. Procédé selon la revendication 4, **caractérisé en ce que** plusieurs paires de faisceaux initiaux (4', 4'') , (4"', 4"") sont appliquées à chacun desdits milieux non linéaires du deuxième ordre (3', 3", 3"' ... 3ⁿ) séparés en conséquence, où les faisceaux de chaque paire se superposent et leurs fréquences sont sommées en des faisceaux de fréquence de somme (5', 5"), (5"', 5"") en conséquence, où les faisceaux de fréquence de somme (5', 5") dans le premier milieu (3') séparé sont combinés simultanément les uns avec les autres en obtenant le faisceau combiné (6'), qui est combiné séquentiellement dans un autre milieu (3") séparé, avec d'autres faisceaux de fréquence de somme (5"' , 5"") en obtenant le faisceau combiné (6") et ainsi de suite jusqu'à ce que toutes les paires de faisceaux initiaux soient sommées et que tous les faisceaux de fréquence de somme soient combinés en un faisceau unique (6ⁿ) ayant les paramètres souhaités.

7. Procédé selon l'une quelconque des revendications 3 à 6, **caractérisé en ce que** lesdits faisceaux laser initiaux (4... 4ⁿ) sommés par paires en les faisceaux de fréquence de somme (5 ... 5ⁿ), qui sont combinés simultanément en les faisceaux laser (6 ... 6ⁿ) sont non colinéaires, cependant ils peuvent être colinéaires avec les faisceaux (4'... 4ⁿ⁺¹), sommés séquentiellement dans d'autres étages.

8. Procédé selon l'une quelconque des revendications précédentes, **caractérisé en ce que** les faisceaux laser initiaux (4 ... 4ⁿ) mutuellement non cohérents ayant les mêmes longueurs d'onde sont appliqués dans un milieu non linéaire du deuxième ordre (3 ... 3ⁿ) en conséquence.

9. Procédé selon la revendication 8, **caractérisé en ce que**, dans les milieux non linéaires du deuxième ordre (3 ... 3ⁿ), la fréquence de somme générée par les paires de faisceaux laser (4 ... 4ⁿ) est la deuxième harmonique.

10. Procédé selon l'une quelconque des revendications 1 à 7, **caractérisé en ce que** les faisceaux laser initiaux (4 ... 4ⁿ) mutuellement non cohérents appliqués dans un milieu non linéaire du deuxième ordre (3 ... 3ⁿ) peuvent avoir différentes longueurs d'onde.

11. Procédé selon la revendication 10, **caractérisé en ce que** les longueurs d'onde des faisceaux laser (4 ... 4ⁿ) appariés qui sont sommés sont égales, cependant elles diffèrent des longueurs d'onde des faisceaux (4' ... 4ⁿ⁺¹) qui sont séquentiellement sommés dans d'autres étages.

12. Procédé selon la revendication 10, **caractérisé en ce que** les longueurs d'onde des faisceaux laser (4 ... 4ⁿ) appariés qui sont sommés sont différentes, cependant elles ne diffèrent pas des longueurs d'onde des faisceaux (4' ... 4ⁿ⁺¹) qui sont séquentiellement sommés dans d'autres étages.

13. Dispositif pour une combinaison de faisceaux laser, comprenant plusieurs lasers, lesquels faisceaux (4) sont appliqués dans un milieu optique non linéaire, qui est utilisé pour effectuer la combinaison de faisceaux, obtenant à la sortie un faisceau laser avec une longueur d'onde modifiée, **caractérisé en ce que** le milieu optique non linéaire est un milieu non linéaire du deuxième ordre (3) dans lequel les faisceaux laser (4) sont sommés par paires en additionnant leurs fréquences et en utilisant une interaction non linéaire, pour obtenir des faisceaux de fréquence de somme (5), les faisceaux de fréquence de somme (5) obtenus, au moins deux, sont combinés en un faisceau unique (6) en satisfaisant la condition d'adaptation de phase dans le même milieu non linéaire du deuxième ordre (3).

14. Dispositif pour une combinaison de faisceaux laser, comprenant plusieurs lasers, lesquels faisceaux laser (4) sont appliqués dans un milieu optique non linéaire, qui est utilisé pour effectuer la combinaison de faisceaux, obtenant à la sortie un faisceau laser avec une longueur d'onde modifiée, **caractérisé en ce que** le milieu optique non linéaire est une séquence de milieux non linéaires du deuxième ordre (3', 3'', ..., 3ⁿ) séparés agencés sur le même axe optique, où les faisceaux laser (4', 4", ..., 4ⁿ) sont sommés par paires, au moins une paire dans chaque milieu non linéaire (3', 3", ..., 3ⁿ) séparé en additionnant leurs fréquences et en utilisant une interaction non linéaire, pour obtenir des faisceaux de fréquence de somme (5', 5", ..., 5ⁿ) en conséquence, les faisceaux de fréquence de somme (5', 5", ..., 5ⁿ) obtenus en satisfaisant à une condition d'adaptation de phase sont combinés en un faisceau unique (6ⁿ) dans la séquence de milieux non linéaires du deuxième ordre (3', 3", ..., 3ⁿ) séparés.

15. Dispositif selon la revendication 14, **caractérisé en ce que** ledit milieu non linéaire du deuxième ordre comprend deux milieux non linéaires du deuxième ordre (3', 3") séparés dans chacun desquels est effectuée une sommation de deux paires des faisceaux laser (4', 4'') et (4''', 4''''), obtenant des faisceaux de fréquence de somme (5', 5" ) et (5"', 5"") en conséquence qui sont combinés dans les milieux non linéaires (3', 3"), en des faisceaux uniques (6', 6") en conséquence, et deux contrôleurs de phase de faisceau (9, 10) sont prévus pour la commande de phase d'au moins un faisceau laser appliqué chaque milieu non linéaire (3', 3") en conséquence pour satisfaire une condition d'adaptation de phase en combinant les faisceaux laser de fréquence de somme en des faisceaux uniques (6', 6").
